# EUROPÄISCHE PATENTSCHRIFT

(11) **EP 3 609 158 B1**
(45) Veröffentlichungstag und Bekanntmachung des Hinweises auf die Patenterteilung: **23.02.2022**
(21) Anmeldenummer: 19190738.5
(22) Anmeldetag: 08.08.2019
(51) Int. Cl.: H04L 29/06, G06F 21/32

(54) **NETZWERKMODUL ZUM BEREITSTELLEN EINER KOMMUNIKATIONSVERBINDUNG ZWISCHEN EINER DATENVERARBEITUNGSENTITÄT UND EINEM KOMMUNIKATIONSNETZWERK**
NETWORK MODULE FOR PROVIDING A COMMUNICATION CONNECTION BETWEEN A DATA PROCESSING ENTITY AND A COMMUNICATION NETWORK
MODULE DE RÉSEAU PERMETTANT DE FOURNIR UNE CONNEXION DE COMMUNICATION ENTRE UNE ENTITÉ DE TRAITEMENT DES DONNÉES ET UN RÉSEAU DE COMMUNICATION

(30) Priorität: 10.08.2018 DE 102018119530
(43) Veröffentlichungstag der Anmeldung: 12.02.2020
(73) Patentinhaber: Bundesdruckerei GmbH, 10969 Berlin (DE); genua GmbH, 85551 Kirchheim (DE); Infineon Technologies AG, 85579 Neubiberg (DE)
(72) Erfinder: FISCHER, Jörg, 10317 Berlin (DE); PAESCHKE, Manfred, 16348 Wandlitz (DE); DRESSEL, Olaf, 14641 Wustermark (DE); OCHS, Matthias, 85560 Ebersberg (DE); STAMPKA, Peter, 93133 Burglengenfeld (DE); HOUDEAU, Detlef, 84085 Langquaid (DE); PÜSCHNER, Frank, 93309 Kelheim (DE)
(74) Vertreter: Patentship Patentanwaltsgesellschaft mbH

(56) Entgegenhaltungen:
- US-A1- 2007 109 098
- US-A1- 2017 366 026

## Beschreibung

### TECHNISCHES GEBIET

Die vorliegende Erfindung betrifft das Gebiet der Kommunikationstechnik, insbesondere der Netzwerkauthentifizierung zum Aufbauen einer Kommunikationsverbindung.

### TECHNISCHER HINTERGRUND

Im Zuge der digitalen Transformation kommt eine Vielzahl interaktiver Geräte mit einer Vielzahl von Schnittstellen zum Einsatz. Hierbei existieren einzelne Komponenten zur sicheren Authentifizierung von Personen, beispielsweise mittels Fingerabdrücken, und separate Komponenten zur sicheren Verbindung von Computern via Internet mit beispielsweise mit einem Firmennetzwerk.

Die Vielfalt der Komponenten für die Digitalisierung ist sehr groß und dadurch teilweise unübersichtlich. Eine Vielzahl der existierenden Komponenten ist zudem wenig benutzerfreundlich und wichtige Sicherheitsfunktionen sind teilweise nicht implementiert. Viele Computer sind zudem ungeschützt mit dem Internet verbunden und können leicht Opfer von Cyberangriffen werden und wirtschaftliche Schäden verursachen, beispielsweise durch einen unkontrollierten Zugriff auf Daten.

Die Offenlegungsschrift US 2007/109098 A1 offenbart ein System zum Steuern eines Zugriffs auf ein Netzwerk.

Die Offenlegungsschrift US 2017/366026 A1 offenbart ein Ladegerät.

### BESCHREIBUNG DER ERFINDUNG

Es ist eine Aufgabe der vorliegenden Erfindung, ein effizientes Konzept zum Bereitstellen einer Kommunikationsverbindung zwischen einer Datenverarbeitungsentität eines Benutzers und einem Kommunikationsnetzwerk zu schaffen.

Diese Aufgabe wird durch die Merkmale der unabhängigen Ansprüche gelöst. Vorteilhafte Ausführungsformen der Erfindung sind Gegenstand der Beschreibung, der Zeichnungen sowie der abhängigen Ansprüche.

Die vorliegende Erfindung basiert auf der Erkenntnis, dass die obige Aufgabe durch eine Verschmelzung von sicherer Authentifizierung, beispielsweise durch eine biometrische Authentifizierung mittels Fingerabdruck oder verhaltensbasierter Merkmale, und sicherer Kommunikation, beispielsweise sicherer drahtloser Kommunikation mittels LTE bzw. 5G zu einem Netzwerkmodul gelöst werden kann. Dadurch wird erreicht, dass eine intrinsische Sicherheit zum Schutz vor Schadcode bereitgestellt werden kann. Der Benutzer kann ferner die Kontrolle über aufgebaute Kommunikationsverbindungen und Daten sichern und behalten. Ferner kann eine einfache Integration in Geräte oder Maschinen im Umfeld des Geräte- und Maschinenbaus realisiert werden. Zudem kann eine Plattform für vielfältige Anwendungen, beispielsweise für einen Zugang zu einem Firmennetzwerk, Zugang zu einer Produktionsanlage für Fernwartungen, oder für den Geräte- und Maschinenbau realisiert werden. Das Netzwerkmodul kann besonders vorteilhaft im Umfeld des Internet-of-Things (loT) und der Industrie 4.0 zum Einsatz kommen. Das Netzwerkmodul kann hochintegriert implementiert werden.

Gemäß einem ersten Aspekt betrifft die Erfindung ein Netzwerkmodul zum Bereitstellen einer Kommunikationsverbindung zwischen einer Datenverarbeitungsentität eines Benutzers und einem Kommunikationsnetzwerk. Das Netzwerkmodul umfasst eine erste Kommunikationsschnittstelle für die drahtgebundene Kommunikation mit der Datenverarbeitungsentität, eine zweite Kommunikationsschnittstelle für die Kommunikation mit dem Kommunikationsnetzwerk, eine Benutzerschnittstelle, welche ausgebildet ist, ein personenbezogenes Merkmal des Benutzers zu empfangen, und einen Prozessor, welcher ausgebildet ist, den Benutzer auf der Basis des empfangenen personenbezogenen Merkmals für den Zugriff auf das Kommunikationsnetzwerk zu authentifizieren, wobei der Prozessor ferner ausgebildet ist, bei erfolgreicher Authentifizierung des Benutzers eine Kommunikationsverbindung zwischen der ersten Kommunikationsschnittstelle und dem Kommunikationsnetzwerk über die zweite Kommunikationsschnittstelle freizugeben.

Die Datenverarbeitungsentität kann beispielsweise ein Computer des Benutzers, ein Kommunikationsgerät des Benutzers, oder eine Kombination eines Computers und eines Kommunikationsgerätes des Benutzers sein.

Gemäß einer Ausführungsform ist das personenbezogene Merkmal des Benutzers ein biometrisches Merkmal des Benutzers, wobei die Benutzerschnittstelle ausgebildet ist, das biometrische Merkmal des Benutzers, insbesondere einen Fingerabdruck oder ein Iris-Bild oder ein Venenbild, aufzunehmen. Dadurch wird der Vorteil erreicht, dass der Benutzer zuverlässig authentifiziert werden kann. Die Authentifizierung kann beispielsweise nach Rolle (Role Based Access Control; ANSI 359-2004) oder nach Attributen (Attribut Based Access Control; NIST 800-162) erfolgen.

Gemäß einer Ausführungsform weist die Benutzerschnittstelle einen Fingerabdruckleser oder einen Venenbildleser oder einen Iris-Scanner zum Aufnehmen des biometrischen Merkmals des Benutzers auf. Dadurch wird der Vorteil erreicht, dass das biometrische Merkmal als personenbezogenes Merkmal effizient aufgenommen werden kann.

Gemäß einer Ausführungsform umfasst das Netzwerkmodul einen Speicher, in welchem ein Referenzmerkmal gespeichert ist, insbesondere ein Referenz-Fingerabdruck oder ein Referenz-Iris-Bild oder ein Referenz-Venenbild, wobei der Prozessor ausgebildet ist, das empfangene personenbezogene Merkmal mit dem gespeicherten Referenzmerkmal zu vergleichen und bei einer Übereinstimmung zwischen dem empfangenen personenbezogenen Merkmal und dem gespeicherten Referenzmerkmal den Benutzer zu authentifizieren. Dadurch wird der Vorteil erreicht, dass die Authentifizierung des Benutzers autark durch das Netzwerkmodul durchgeführt werden kann.

Gemäß einer Ausführungsform ist die zweite Kommunikationsschnittstelle ausgebildet, das empfangene personenbezogene Merkmal über das Kommunikationsnetzwerk an einen Authentifizierungsserver zur Authentifizierung des Benutzers für den Zugriff auf das Kommunikationsnetzwerk zu übermitteln, wobei die zweite Kommunikationsschnittstelle ausgebildet ist, von dem Authentifizierungsserver über das Kommunikationsnetzwerk ein Authentifizierungssignal zu empfangen, und wobei der Prozessor ausgebildet ist, die Kommunikationsverbindung zwischen der ersten Kommunikationsschnittstelle und dem Kommunikationsnetzwerk über die zweite Kommunikationsschnittstelle freizugeben falls das Authentifizierungssignal die Authentifizierung des Benutzers für den Zugriff auf das Kommunikationsnetzwerk anzeigt. Dadurch wird der Vorteil erreicht, dass Referenzmerkmals zentral durch den Authentifizierungsserver verwaltet werden können. Zugleich können Speicherressourcen und/oder Rechenressourcen auf dem Netzwerkmodul eingespart werden.

Erfindungsgemäß ist der Prozessor ausgebildet, bei erfolgreicher Authentifizierung des Benutzers die zweite Kommunikationsschnittstelle zum Aufbauen einer Kommunikationsverbindung anzuweisen, und wobei die zweite Kommunikationsschnittstelle ausgebildet ist, die Kommunikationsverbindung mit dem Kommunikationsnetzwerk aufzubauen. Dadurch wird der Vorteil erreicht, dass eine Kommunikationsverbindung erstmalig durch die zweite Kommunikationsschnittstelle aufgebaut werden kann.

Gemäß einer Ausführungsform ist der Prozessor ausgebildet, bei erfolgreicher Authentifizierung des Benutzers eine Kommunikationsverbindung zwischen der ersten Kommunikationsschnittstelle und der zweiten Kommunikationsschnittstelle, insbesondere bei bestehender Kommunikationsverbindung zwischen der zweiten Kommunikationsschnittstelle und dem Kommunikationsnetzwerk, herzustellen, insbesondere die erste Kommunikationsschnittstelle mit der zweiten Kommunikationsschnittstelle mittels eines steuerbaren Schalters zu verbinden. Dadurch wird der Vorteil erreicht, dass die Datenverarbeitungsentität effizient über das Netzwerkmodul mit dem Kommunikationsnetzwerk kommunizieren kann.

Gemäß einer Ausführungsform weist die zweite Kommunikationsschnittstelle ein Teilnehmeridentitätsmodul, insbesondere ein SIM-Modul oder ein eSIM-Modul oder ein iSIM-Modul, für die Kommunikation über das Kommunikationsnetzwerk auf, wobei das Kommunikationsnetzwerk ein mobiles Kommunikationsnetzwerk ist. Das iSIM-Modul kann beispielsweise als Firmware in einer sicheren Enklave des Prozessors implementiert sein. Dadurch wird der Vorteil erreicht, dass die Datenverarbeitungsentität kein eigenes Teilnehmeridentitätsmodul zur Kommunikation mit dem Kommunikationsnetzwerk benötigt.

Gemäß einer Ausführungsform ist die zweite Kommunikationsschnittstelle ausgebildet, mit dem Kommunikationsnetzwerk drahtgebunden, insbesondere gemäß der Ethernet- oder DSL- oder LAN-Technologie, oder drahtlos, insbesondere gemäß der WLAN- oder Bluetooth-Technologie, zu kommunizieren. Dadurch wird der Vorteil erreicht, dass das Netzwerkmodul effizient über das Kommunikationsnetzwerk kommunizieren kann.

Gemäß einer Ausführungsform ist die erste Kommunikationsschnittstelle eine drahtgebundene Kommunikationsschnittstelle, insbesondere eine USB- oder LAN- oder Ethernet-Schnittstelle. Dadurch wird der Vorteil erreicht, dass das Netzwerkmodul effizient mit der Datenverarbeitungsentität kommunizieren kann.

Gemäß einer Ausführungsform ist die erste Kommunikationsschnittstelle eine drahtgebundene Kommunikationsschnittstelle, welche ausgebildet ist, elektrische Energie zum Betreiben des Netzwerkmoduls von der Datenverarbeitungsentität zu empfangen. Dadurch wird der Vorteil erreicht, dass auf eine eigene Energieversorgung des Netzwerkmoduls verzichtet werden kann.

Gemäß einer Ausführungsform ist das Netzwerkmodul als ein tragbarer Hardware-Token, insbesondere USB-Token, ausgeführt. Dadurch wird der Vorteil erreicht, dass das Netzwerkmodul effizient mit Datenverarbeitungsentitäten, beispielsweise über einen USB-Anschluss, kommunizieren kann.

Gemäß einer Ausführungsform ist der Prozessor ausgebildet, die Kommunikationsverbindung zwischen der ersten Kommunikationsschnittstelle und dem Kommunikationsnetzwerk nach Ablauf eines vorbestimmten Zeitintervalls oder bei Erreichen eines vorbestimmten Datenvolumengrenzwertes oder ansprechend auf einen Empfang eines Deaktivierungssignals über die erste Kommunikationsschnittstelle von der Datenverarbeitungsentität zu deaktivieren. Auch Umgebungsbedingungen, Zugriffsregeln und/oder Vorgabe von Ressourcen können geeignete Faktoren darstellen, wie beispielsweise in NIST 800-162 beschrieben. Dadurch wird der Vorteil erreicht, dass die Kommunikation zwischen der Datenverarbeitungsentität und dem Kommunikationsnetzwerk effizient unterbunden werden kann.

Gemäß einer Ausführungsform erreicht das Netzwerkmodul den Security Level SL3 und/oder SL4 für sichere digitale Identitäten nach IEC 62443. Dadurch wird der Vorteil erreicht, dass ein hohes Sicherheitsniveau gewährleistet werden kann.

Gemäß einem zweiten Aspekt betrifft die Erfindung ein Verfahren zum Betreiben eines Netzwerkmoduls zum Bereitstellen einer Kommunikationsverbindung zwischen einer Datenverarbeitungsentität eines Benutzers und einem Kommunikationsnetzwerk. Das Netzwerkmodul weist eine erste Kommunikationsschnittstelle, eine zweite Kommunikationsschnittstelle, eine Benutzerschnittstelle, und einen Prozessor auf. Die erste Kommunikationsschnittstelle ist für die drahtgebundene Kommunikation mit der Datenverarbeitungsentität ausgebildet. Die zweite Kommunikationsschnittstelle ist für die Kommunikation mit dem Kommunikationsnetzwerk ausgebildet. Das Verfahren umfasst ein Empfangen eines personenbezogenen Merkmals des Benutzers durch die Benutzerschnittstelle, ein Authentifizieren des Benutzers auf der Basis des empfangenen personenbezogenen Merkmals für den Zugriff auf das Kommunikationsnetzwerk durch den Prozessor, und ein Freigeben einer Kommunikationsverbindung zwischen der ersten Kommunikationsschnittstelle und dem Kommunikationsnetzwerk über die zweite Kommunikationsschnittstelle durch den Prozessor bei erfolgreicher Authentifizierung des Benutzers.

Das Verfahren kann durch das Netzwerkmodul ausgeführt werden. Weitere Merkmale des Verfahrens resultieren unmittelbar aus den Merkmalen und/oder der Funktionalität des Netzwerkmoduls.

Gemäß einem dritten Aspekt betrifft die Erfindung ein Computerprogramm mit einem Programmcode zum Durchführen des Verfahrens, wenn der Programmcode auf einem Netzwerkmodul ausgeführt wird.

Die Erfindung kann in Hardware und/oder in Software realisiert werden.

### BESCHREIBUNG DER FIGUREN

Weitere Ausführungsbeispiele werden bezugnehmend auf die beiliegenden Zeichnungen näher erläutert. Es zeigen:
Fig. 1 ein schematisches Diagramm eines Netzwerkmoduls zum Bereitstellen einer Kommunikationsverbindung zwischen einer Datenverarbeitungsentität eines Benutzers und einem Kommunikationsnetzwerk;
Fig. 2 ein schematisches Diagramm eines Verfahrens zum Betreiben eines Netzwerkmoduls zum Bereitstellen einer Kommunikationsverbindung zwischen einer Datenverarbeitungsentität eines Benutzers und einem Kommunikationsnetzwerk;
Fig. 3 ein schematisches Diagramm eines Netzwerkmoduls zum Bereitstellen einer Kommunikationsverbindung zwischen einer Datenverarbeitungsentität eines Benutzers und einem Kommunikationsnetzwerk;
Fig. 4a ein schematisches Diagramm eines Netzwerkmoduls zum Bereitstellen einer Kommunikationsverbindung zwischen einer Datenverarbeitungsentität eines Benutzers und einem Kommunikationsnetzwerk;
Fig. 4b ein schematisches Diagramm eines Netzwerkmoduls zum Bereitstellen einer Kommunikationsverbindung zwischen einer Datenverarbeitungsentität eines Benutzers und einem Kommunikationsnetzwerk;
Fig. 4c ein schematisches Diagramm eines Netzwerkmoduls zum Bereitstellen einer Kommunikationsverbindung zwischen einer Datenverarbeitungsentität eines Benutzers und einem Kommunikationsnetzwerk; und
Fig. 4d ein schematisches Diagramm eines Netzwerkmoduls zum Bereitstellen einer Kommunikationsverbindung zwischen einer Datenverarbeitungsentität eines Benutzers und einem Kommunikationsnetzwerk.

### DETAILIERTE BESCHREIBUNG DER FIGUREN

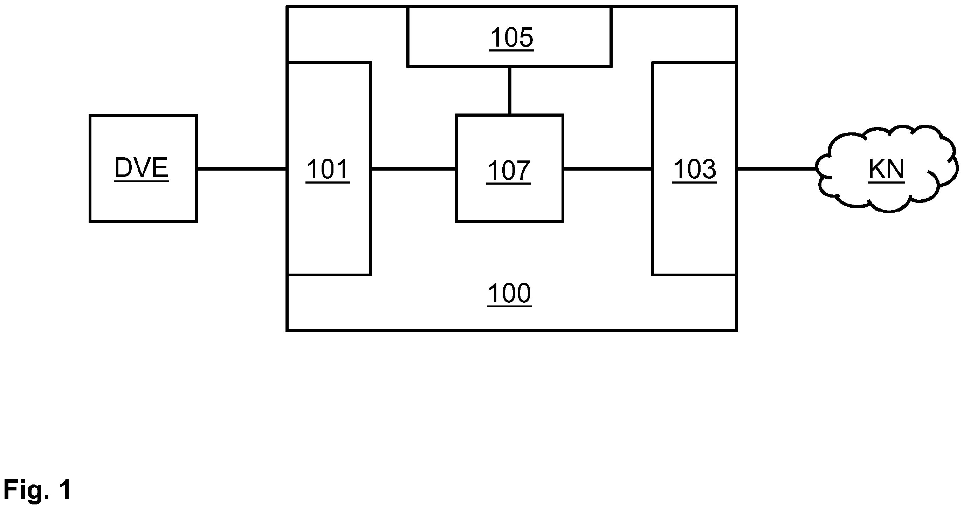

Fig. 1 zeigt ein schematisches Diagramm eines Netzwerkmoduls 100 zum Bereitstellen einer Kommunikationsverbindung zwischen einer Datenverarbeitungsentität DVE eines Benutzers und einem Kommunikationsnetzwerk KN.

Das Netzwerkmodul 100 umfasst eine erste Kommunikationsschnittstelle 101 für die drahtgebundene Kommunikation mit der Datenverarbeitungsentität DVE, eine zweite Kommunikationsschnittstelle 103 für die Kommunikation mit dem Kommunikationsnetzwerk KN, eine Benutzerschnittstelle 105, welche ausgebildet ist, ein personenbezogenes Merkmal des Benutzers zu empfangen, und einen Prozessor 107, welcher ausgebildet ist, den Benutzer auf der Basis des empfangenen personenbezogenen Merkmals für den Zugriff auf das Kommunikationsnetzwerk KN zu authentifizieren, wobei der Prozessor 107 ferner ausgebildet ist, bei erfolgreicher Authentifizierung des Benutzers eine Kommunikationsverbindung zwischen der ersten Kommunikationsschnittstelle 101 und dem Kommunikationsnetzwerk KN über die zweite Kommunikationsschnittstelle 103 freizugeben.

Das Netzwerkmodul 100, insbesondere die Benutzerschnittstelle 105, kann weitere personenbezogene Merkmale des Benutzers empfangen. Ferner kann das Netzwerkmodul 100, insbesondere der Prozessor 107, den Benutzer auf der Basis der empfangenen weiteren personenbezogenen Merkmale authentifizieren. Dadurch kann eine Authentifizierung des Benutzers mittels multi-modaler Biometrie erfolgen. Dies kann die Benutzerfreundlichkeit und die Sicherheit weiter erhöhen.

Das Netzwerkmodul 100 kann eine benutzerfreundliche Authentifizierung mit einer autarken, hochsicheren Kommunikation ermöglichen. Das Netzwerkmodul 100 kann zudem die folgenden Merkmale aufweisen:
- Hochintegrierte 2D/3D-Chipmodul-Bauweise mit zentralem Mikroprozessor, beispielsweise einem nach ISO/IEC 15408 sicherheitszertifizierten TPM-Mikroprozessor;
- Komplexe Aufbau- und Verbindungstechnik, z.B. System-in-Panel;
- Innovative biometrische Authentisierungstechnologien, z.B. mittels Fingerabdruck oder verhaltensbasierter Authentifizierung unter Verwendung eines Gyro-Sensors;
- Autarke Kommunikationstechnologien, z.B. WiFi, LTE/5G, NFC oder Bluetooth LE;
- Geringe Stromaufnahme, z.B. mittels USB oder Energy Harvesting;
- Ableitung der Wärme und Lichtleitung für integrierte Benutzerführung, z.B. mittels LEDs;
- User-Experience- (UX)- und Anwendungsspezifischer Designprozess;
- Fertigung mit neuen Materialien, z.B. Organoblech oder Verbundfasermaterialien;
- Robuste Ausführung für Nutzung in der Produktionsumgebung.

Die Implementierung des Netzwerkmoduls 100 kann in Anlehnung an den standardisierten Lebenszyklus von sicheren Identitäten nach ISO/IEC 29115, dem Zugangsmanagement nach ISO/IEC 29146, dem Identitätsmanagement nach ISO/IEC 24760-1 sowie der Referenzarchitektur für I4.0 nach DIN SPEC 91345 erfolgen.

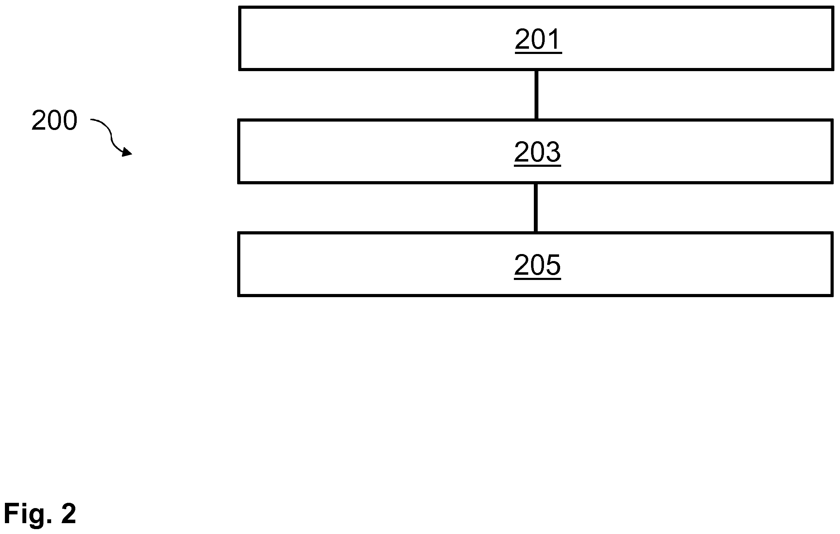

Fig. 2 zeigt ein schematisches Diagramm eines Verfahrens 200 zum Betreiben eines Netzwerkmoduls zum Bereitstellen einer Kommunikationsverbindung zwischen einer Datenverarbeitungsentität eines Benutzers und einem Kommunikationsnetzwerk. Das Netzwerkmodul weist eine erste Kommunikationsschnittstelle, eine zweite Kommunikationsschnittstelle, eine Benutzerschnittstelle, und einen Prozessor auf. Die erste Kommunikationsschnittstelle ist für die drahtgebundene Kommunikation mit der Datenverarbeitungsentität ausgebildet. Die zweite Kommunikationsschnittstelle ist für die Kommunikation mit dem Kommunikationsnetzwerk ausgebildet.

Das Verfahren 200 umfasst ein Empfangen 201 eines personenbezogenen Merkmals des Benutzers durch die Benutzerschnittstelle, ein Authentifizieren 203 des Benutzers auf der Basis des empfangenen personenbezogenen Merkmals für den Zugriff auf das Kommunikationsnetzwerk durch den Prozessor, und ein Freigeben 205 einer Kommunikationsverbindung zwischen der ersten Kommunikationsschnittstelle und dem Kommunikationsnetzwerk über die zweite Kommunikationsschnittstelle durch den Prozessor bei erfolgreicher Authentifizierung des Benutzers.

Das Verfahren 200 kann beispielsweise unter Verwendung eines Computerprogramms mit einem Programmcode durch das Netzwerkmodul ausgeführt werden.

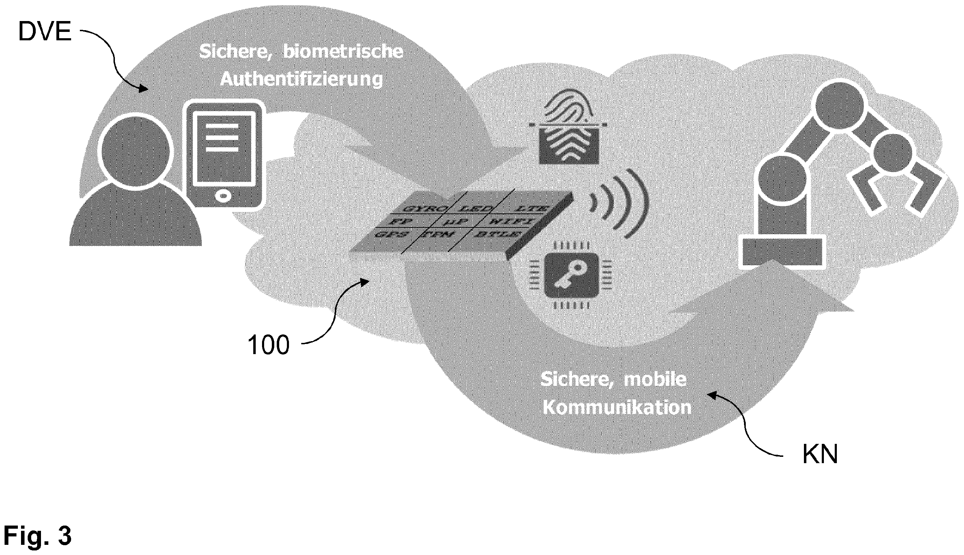

Fig. 3 zeigt ein schematisches Diagramm eines Netzwerkmoduls 100 zum Bereitstellen einer Kommunikationsverbindung zwischen einer Datenverarbeitungsentität DVE eines Benutzers und einem Kommunikationsnetzwerk KN. Das Netzwerkmodul 100 kann als benutzergesteuertes, hochintegriertes Modul implementiert werden. Dabei kann eine biometrische Authentifizierung und eine sichere autarke Kommunikation verwendet werden. Gemäß einer Ausführungsform erreicht das Netzwerkmodul 100 den Security Level 4 (SL4) in Verbindung mit Secure Identification (SID) nach IEC 62443-3-3.

Das Netzwerkmodul 100 kann beispielsweise die Datenverarbeitungsentität DVE vor Schadcode schützen. Ferner können Datensparsamkeit und Schutz der Privatsphäre berücksichtigt werden. Gemäß einer Ausführungsform wird nur dann eine sichere Kommunikationsverbindung ermöglicht, wenn der Benutzer dies ausdrücklich will.

Gemäß einer Ausführungsform erfolgt eine Verschmelzung von sicherer biometrischer Authentifizierung, beispielsweise mittels Fingerabdruck oder verhaltensbasierter Merkmale, und hochsicherer mobiler Kommunikation, beispielsweise mittels LTE, zu einem hochintegrierten Netzwerkmodul 100 für loT und Industrie 4.0 Anwendungen im Sinne einer 2-Faktor Authentifizierung (Besitz und Eigenschaft). Das Netzwerkmodul 100 kann Teil einer massenmarkttauglichen Plattform für zahlreiche IoT-Anwendungsgebiete, beispielsweise für einen Zugang zu Firmennetzwerken (VPN), eine Fernwartung (Remote Access), oder für den Geräte- und Maschinenbau (loT), sein. Das Netzwerkmodul 100 kann ferner neben der Cyber-Sicherheit die Flexibilität für Industrie 4.0 und IoT-Anwendungen gewährleisten.

Die fortschreitende Digitalisierung ermöglicht eine Hochintegration von Silizium-Komponenten im Wafer Level Packaging bzw. im Panel Level Packaging anstelle einer Integration diskreter Komponenten. Vernetzte elektronische Geräte prägen verstärkt den Lebens- und Arbeitsalltag (loT). Die Digitalisierung bringt neue Möglichkeiten der Kommunikation, des Wissenszugangs und Chancen der Entfaltung neuer Geschäftsmodelle. Die Vielfalt der Komponenten für die Digitalisierung ist sehr groß und dadurch teilweise unübersichtlich. Viele der existierenden Komponenten sind zudem wenig benutzerfreundlich und wichtige Sicherheitsfunktionen sind zumeist nicht implementiert.

Zudem werden hohe Erwartungen und Anforderungen an digitale Komponenten und Kommunikationstechnologien gestellt, beispielsweise eine vollständige Kontrolle durch den Benutzer und Bedienkomfort, eine unbeschränkte Vertraulichkeit und Sicherheit, eine hohe Zuverlässigkeit, Flexibilität und Verfügbarkeit, sowie Integrität. Weitere Schutzziele sind u.a. Authentizität, Nichtabstreitbarkeit und Zurechenbarkeit.

Gemäß einer Ausführungsform stellt das Netzwerkmodul 100 eine Synthese von benutzerfreundlicher Authentifizierung auf hohem technischen Niveau und autarker, hochsicherer und mobiler Kommunikation dar. High-level Sicherheitskomponenten werden somit massenmarkttauglich und haben die Chance, sich als zentrale Komponente in einer großen Menge von zukünftigen loT-Geräten zu etablieren.

Gemäß einer Ausführungsform bildet das Netzwerkmodul 100 eine miniaturisierte Einheit aus Faserverbundwerkstoff, hochintegriert mit autarker Kommunikation, Konnektivität und Stromversorgung über USB oder Energy Harvesting und Authentifizierung über biometrische Merkmale. Verschiedene Ausführungsformen als ID-Karte, Wearable, USB-Token oder Steckmodul sind möglich.

Das Netzwerkmodul 100 ermöglicht beispielsweise eine Kommunikation und Authentifizierung unabhängig von der Datenverarbeitungsentität DVE, beispielsweise einem Computer, und schützt damit die Sicherheitsfunktionen selbst vor Schadcode. Gemäß einer Ausführungsform verlassen sensible biometrische Daten das Netzwerkmodul 100 nicht. Die biometrischen Daten können im Netzwerkmodul 100 sicher gespeichert und geprüft werden.

In einem ersten beispielhaften Anwendungsszenario möchte sich der Benutzer einfach, schnell und sicher mit einem Firmennetzwerk verbinden, ohne sich Passwörter merken zu müssen. Mithilfe des Netzwerkmoduls 100, das mit einem Computer als Datenverarbeitungsentität DVE verbunden werden kann, erfolgt die einfache und sichere Authentifizierung und es wird autark ein verschlüsseltes Virtual Private Network (VPN) in das Firmennetzwerk (Office-IT und/oder Operation-IT) aufgebaut.

In einem zweiten beispielhaften Anwendungsszenario erfolgt eine authentifizierte Fernwartung (Remote Access) auf Computer und Maschinen (Fernwartung/Teleservice/IoT). Der Benutzer verbindet lediglich das Netzwerkmodul 100 mit dem zu wartenden Computer, authentisiert sich z.B. mittels Fingerabdruck und eine sichere Kommunikationsverbindung wird geöffnet.

In einem dritten beispielhaften Anwendungsszenario kann das Netzwerkmodul 100 als Komponente in Geräte oder Maschinen integriert werden. Dies ermöglicht beispielsweise den Aufbau einer schnellen, kontrollierten Kommunikationsverbindung des Gerätes mit dem Intranet, dem Internet oder einer Cloud, wenn der Benutzer dies ausdrücklich durch seine biometrische Authentifizierung freigibt.

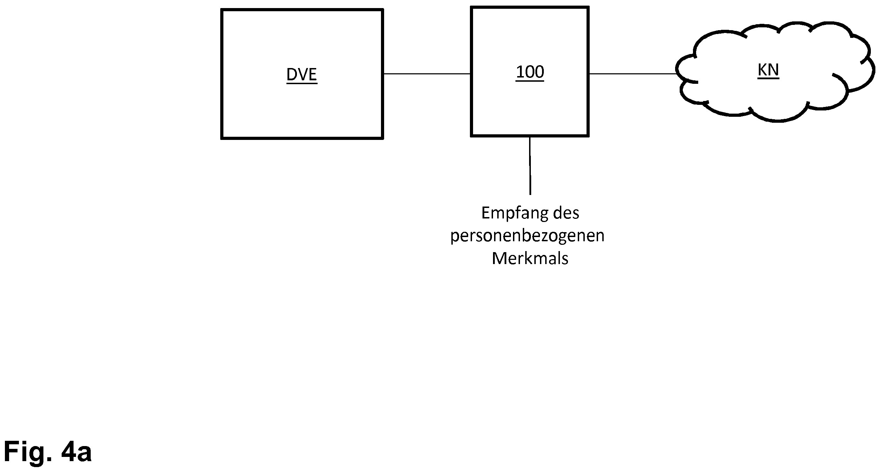

Fig. 4a zeigt ein schematisches Diagramm eines Netzwerkmoduls 100 zum Bereitstellen einer Kommunikationsverbindung zwischen einer Datenverarbeitungsentität DVE eines Benutzers und einem Kommunikationsnetzwerk KN.

Die Datenverarbeitungsentität DVE kann beispielsweise ein Kommunikationsgerät sein. Das Kommunikationsnetzwerk KN kann beispielsweise ein privates Netzwerk, wie ein Firmennetzwerk, sein. Das Kommunikationsnetzwerk KN kann ein WLAN oder ein LAN umfassen. Dem Netzwerkmodul 100 kann eine Netzwerkkennung zugeordnet sein.

Das Netzwerkmodul 100 kann den Benutzer mittels des personenbezogenen Merkmals, beispielsweise eines biometrischen Merkmals des Benutzers, authentifizieren. Das Netzwerkmodul 100 kann einen Speicher zum Speichern eines Referenzmerkmals umfassen. Das Netzwerkmodul 100 kann eine Benutzerschnittstelle zum Empfangen des personenbezogenen Merkmals umfassen. Das Netzwerkmodul 100 kann einen Prozessor zum Vergleichen des empfangenen personenbezogenen Merkmals mit dem Referenzmerkmal umfassen. Daraufhin kann das Netzwerkmodul 100 die Konnektivität zum Kommunikationsnetzwerk KN herstellen. Das Netzwerkmodul 100 kann ein Modem umfassen.

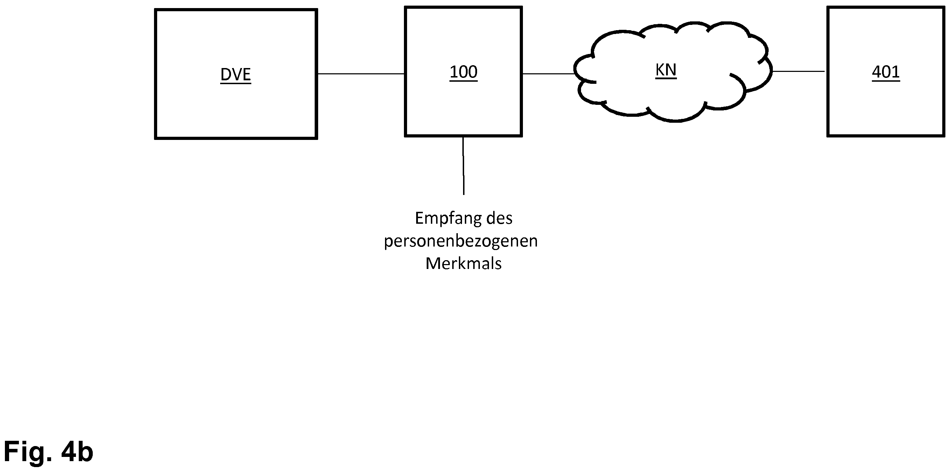

Fig. 4b zeigt ein schematisches Diagramm eines Netzwerkmoduls 100 zum Bereitstellen einer Kommunikationsverbindung zwischen einer Datenverarbeitungsentität DVE eines Benutzers und einem Kommunikationsnetzwerk KN.

Die Datenverarbeitungsentität DVE kann beispielsweise ein Kommunikationsgerät sein. Das Kommunikationsnetzwerk KN kann beispielsweise ein privates Netzwerk, wie ein Firmennetzwerk, sein. Das Netzwerkmodul 100 kann über das Kommunikationsnetzwerk KN mit einem Authentifizierungsserver 401 kommunizieren.

Das Netzwerkmodul 100 kann den Benutzer mittels des personenbezogenen Merkmals, beispielsweise eines biometrischen Merkmals des Benutzers, authentifizieren. Das Netzwerkmodul 100 kann eine Benutzerschnittstelle zum Empfangen des personenbezogenen Merkmals umfassen. Das Netzwerkmodul 100 überträgt das personenbezogene Merkmal an den Authentifizierungsserver 401. Der Authentifizierungsserver 401 vergleicht das personenbezogene Merkmal mit einem vorgespeicherten Referenzmerkmal. Der Authentifizierungsserver 401 überträgt ein Authentifizierungssignal an das Netzwerkmodul 100. Daraufhin kann das Netzwerkmodul 100 die Konnektivität zum Kommunikationsnetzwerk KN herstellen. Das Netzwerkmodul 100 kann ein Modem umfassen.

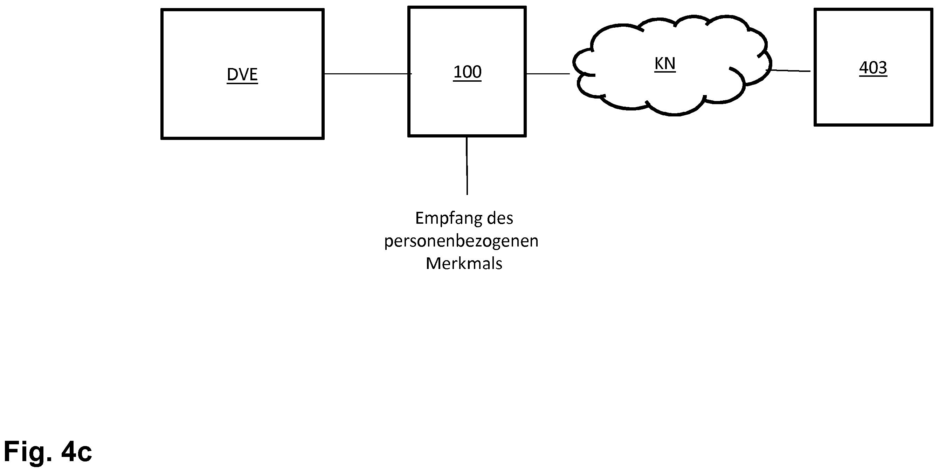

Fig. 4c zeigt ein schematisches Diagramm eines Netzwerkmoduls 100 zum Bereitstellen einer Kommunikationsverbindung zwischen einer Datenverarbeitungsentität DVE eines Benutzers und einem Kommunikationsnetzwerk KN.

Die Datenverarbeitungsentität DVE kann beispielsweise ein Kommunikationsgerät sein. Das Kommunikationsnetzwerk KN kann ein mobiles Kommunikationsnetzwerk sein, und kann beispielsweise ein Funkzugangsnetzwerk (Radio-Access-Network, RAN) umfassen. Die Authentifikation des Netzwerkmoduls 100 hinsichtlich des Funkzugangs kann mittels eines Netzwerkauthentifikationsservers 403 erfolgen. Die zweite Kommunikationsschnittstelle des Netzwerkmoduls 100 weist ein Teilnehmeridentitätsmodul, insbesondere ein SIM-Modul oder ein eSIM-Modul oder ein iSIM-Modul, für die Kommunikation über das Kommunikationsnetzwerk KN auf.

Das Netzwerkmodul 100 stellt die RAN-Konnektivität her. Das Netzwerkmodul 100 kann sich in das Kommunikationsnetzwerk KN einwählen, wobei die Teilnehmeridentität des Netzwerkmoduls 100 durch den Netzwerkauthentifikationsserver 403 überprüft werden kann. Eine Kommunikationsverbindung wird für das Netzwerkmodul 100 bereitgestellt, welches beispielsweise als Bridge operieren kann. Die Datenverarbeitungsentität DVE benötigt folglich kein eigenes Teilnehmeridentitätsmodul. Das weitere Vorgehen entspricht jenem, welches in Verbindung mit Fig. 4a beschrieben wurde.

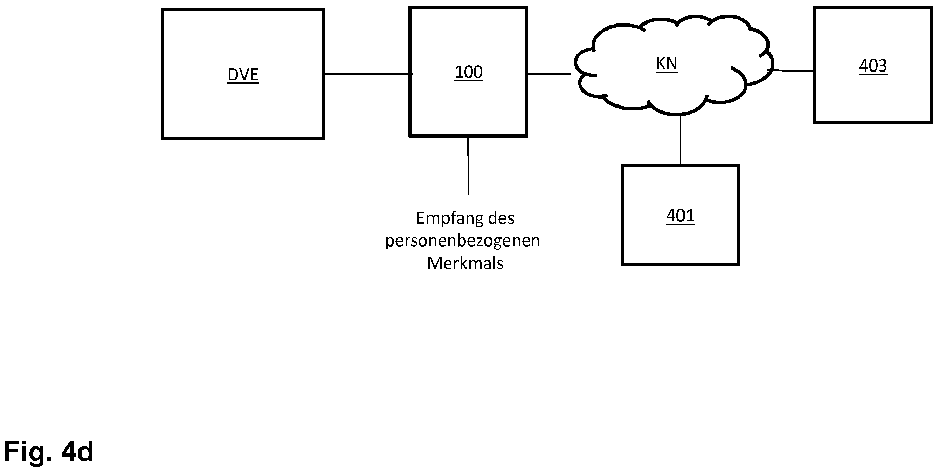

Fig. 4d zeigt ein schematisches Diagramm eines Netzwerkmoduls 100 zum Bereitstellen einer Kommunikationsverbindung zwischen einer Datenverarbeitungsentität DVE eines Benutzers und einem Kommunikationsnetzwerk KN.

Die Datenverarbeitungsentität DVE kann beispielsweise ein Kommunikationsgerät sein. Das Kommunikationsnetzwerk KN kann ein mobiles Kommunikationsnetzwerk sein, und kann beispielsweise ein Funkzugangsnetzwerk (Radio-Access-Network, RAN) umfassen. Das Netzwerkmodul 100 kann über das Kommunikationsnetzwerk KN mit einem Authentifizierungsserver 401 kommunizieren. Die Authentifikation des Netzwerkmoduls 100 hinsichtlich des Funkzugangs kann mittels eines Netzwerkauthentifikationsservers 403 erfolgen. Die zweite Kommunikationsschnittstelle des Netzwerkmoduls 100 weist ein Teilnehmeridentitätsmodul, insbesondere ein SIM-Modul oder ein eSIM-Modul oder ein iSIM-Modul, für die Kommunikation über das Kommunikationsnetzwerk KN auf.

Das Netzwerkmodul 100 stellt die RAN-Konnektivität her. Das Netzwerkmodul 100 kann sich in das Kommunikationsnetzwerk KN einwählen, wobei die Teilnehmeridentität des Netzwerkmoduls 100 durch den Netzwerkauthentifikationsserver 403 überprüft werden kann. Eine Kommunikationsverbindung wird für das Netzwerkmodul 100 bereitgestellt, welches beispielsweise als Bridge operieren kann. Die Datenverarbeitungsentität DVE benötigt folglich kein eigenes Teilnehmeridentitätsmodul. Das weitere Vorgehen entspricht jenem, welches in Verbindung mit Fig. 4b beschrieben wurde.

Alle in Verbindung mit einzelnen Ausführungsformen beschriebenen und gezeigten Merkmale können in beliebiger Kombination in dem erfindungsgemäßen Gegenstand vorgesehen sein, um gleichzeitig deren vorteilhafte Wirkungen zu realisieren.

### BEZUGSZEICHENLISTE

- 100: Netzwerkmodul
- 101: Erste Kommunikationsschnittstelle
- 103: Zweite Kommunikationsschnittstelle
- 105: Benutzerschnittstelle
- 107: Prozessor

- 200: Verfahren
- 201: Empfangen
- 203: Authentifizieren
- 205: Freigeben

- 401: Authentifizierungsserver
- 403: Netzwerkauthentifikationsserver

- DVE: Datenverarbeitungsentität
- KN: Kommunikationsnetzwerk

## Patentansprüche

1. Netzwerkmodul (100) zum Bereitstellen einer Kommunikationsverbindung zwischen einer Datenverarbeitungsentität (DVE) eines Benutzers und einem Kommunikationsnetzwerk (KN), mit:
einer ersten Kommunikationsschnittstelle (101) für die drahtgebundene Kommunikation mit der Datenverarbeitungsentität (DVE);
einer zweiten Kommunikationsschnittstelle (103) für die Kommunikation mit dem Kommunikationsnetzwerk (KN);
einer Benutzerschnittstelle (105), welche ausgebildet ist, ein personenbezogenes Merkmal des Benutzers zu empfangen; und
einem Prozessor (107), welcher ausgebildet ist, den Benutzer auf der Basis des empfangenen personenbezogenen Merkmals für den Zugriff auf das Kommunikationsnetzwerk (KN) zu authentifizieren, wobei der Prozessor (107) ferner ausgebildet ist, bei erfolgreicher Authentifizierung des Benutzers eine Kommunikationsverbindung zwischen der ersten Kommunikationsschnittstelle (101) und dem Kommunikationsnetzwerk (KN) über die zweite Kommunikationsschnittstelle (103) freizugeben, **dadurch gekennzeichnet, dass** der Prozessor (107) ausgebildet ist, bei erfolgreicher Authentifizierung des Benutzers die zweite Kommunikationsschnittstelle (103) zum Aufbauen der Kommunikationsverbindung anzuweisen, und wobei die zweite Kommunikationsschnittstelle (103) ausgebildet ist, die Kommunikationsverbindung mit dem Kommunikationsnetzwerk (KN) aufzubauen.

2. Netzwerkmodul (100) nach Anspruch 1, wobei das personenbezogene Merkmal des Benutzers ein biometrisches Merkmal des Benutzers ist, und wobei die Benutzerschnittstelle (105) ausgebildet ist, das biometrische Merkmal des Benutzers aufzunehmen.

3. Netzwerkmodul (100) nach Anspruch 2, wobei die Benutzerschnittstelle (105) einen Fingerabdruckleser oder einen Venenbildleser oder einen Iris-Scanner zum Aufnehmen des biometrischen Merkmals des Benutzers aufweist.

4. Netzwerkmodul (100) nach einem der vorstehenden Ansprüche, mit einem Speicher, in welchem ein Referenzmerkmal gespeichert ist, insbesondere ein Referenz-Fingerabdruck oder ein Referenz-Iris-Bild oder ein Referenz-Venenbild, und wobei der Prozessor (107) ausgebildet ist, das empfangene personenbezogene Merkmal mit dem gespeicherten Referenzmerkmal zu vergleichen und bei einer Übereinstimmung zwischen dem empfangenen personenbezogenen Merkmal und dem gespeicherten Referenzmerkmal den Benutzer zu authentifizieren.

5. Netzwerkmodul (100) nach einem der vorstehenden Ansprüche, wobei die zweite Kommunikationsschnittstelle (103) ausgebildet ist, das empfangene personenbezogene Merkmal über das Kommunikationsnetzwerk (KN) an einen Authentifizierungsserver (401) zur Authentifizierung des Benutzers für den Zugriff auf das Kommunikationsnetzwerk (KN) zu übermitteln, und wobei die zweite Kommunikationsschnittstelle (103) ausgebildet ist, von dem Authentifizierungsserver (401) über das Kommunikationsnetzwerk (KN) ein Authentifizierungssignal zu empfangen, und wobei der Prozessor (107) ausgebildet ist, die Kommunikationsverbindung zwischen der ersten Kommunikationsschnittstelle (101) und dem Kommunikationsnetzwerk (KN) über die zweite Kommunikationsschnittstelle (103) freizugeben falls das Authentifizierungssignal die Authentifizierung des Benutzers für den Zugriff auf das Kommunikationsnetzwerk (KN) anzeigt.

6. Netzwerkmodul (100) nach einem der vorstehenden Ansprüche, wobei der Prozessor (107) ausgebildet ist, bei erfolgreicher Authentifizierung des Benutzers eine Kommunikationsverbindung zwischen der ersten Kommunikationsschnittstelle (101) und der zweiten Kommunikationsschnittstelle (103) herzustellen.

7. Netzwerkmodul (100) nach einem der vorstehenden Ansprüche, wobei die zweite Kommunikationsschnittstelle (103) ein Teilnehmeridentitätsmodul für die Kommunikation über das Kommunikationsnetzwerk (KN) aufweist, und wobei das Kommunikationsnetzwerk (KN) ein mobiles Kommunikationsnetzwerk (KN) ist.

8. Netzwerkmodul (100) nach einem der vorstehenden Ansprüche, wobei die zweite Kommunikationsschnittstelle (103) ausgebildet ist, mit dem Kommunikationsnetzwerk (KN) drahtgebunden oder drahtlos zu kommunizieren.

9. Netzwerkmodul (100) nach einem der vorstehenden Ansprüche, wobei die erste Kommunikationsschnittstelle (101) eine drahtgebundene Kommunikationsschnittstelle ist.

10. Netzwerkmodul (100) nach einem der vorstehenden Ansprüche, wobei die erste Kommunikationsschnittstelle (101) eine drahtgebundene Kommunikationsschnittstelle ist, welche ausgebildet ist, elektrische Energie zum Betreiben des Netzwerkmoduls (100) von der Datenverarbeitungsentität (DVE) zu empfangen.

11. Netzwerkmodul (100) nach einem der vorstehenden Ansprüche, das als ein tragbarer Hardware-Token ausgeführt ist.

12. Netzwerkmodul (100) nach einem der vorstehenden Ansprüche, wobei der Prozessor (107) ausgebildet ist, die Kommunikationsverbindung zwischen der ersten Kommunikationsschnittstelle (101) und dem Kommunikationsnetzwerk (KN) nach Ablauf eines vorbestimmten Zeitintervalls oder bei Erreichen eines vorbestimmten Datenvolumengrenzwertes oder ansprechend auf einen Empfang eines Deaktivierungssignals über die erste Kommunikationsschnittstelle (101) von der Datenverarbeitungsentität (DVE) zu deaktivieren.

13. Verfahren (200) zum Betreiben eines Netzwerkmoduls (100) zum Bereitstellen einer Kommunikationsverbindung zwischen einer Datenverarbeitungsentität (DVE) eines Benutzers und einem Kommunikationsnetzwerk (KN), wobei das Netzwerkmodul (100) eine erste Kommunikationsschnittstelle (101), eine zweite Kommunikationsschnittstelle (103), eine Benutzerschnittstelle (105), und einen Prozessor (107) aufweist, wobei die erste Kommunikationsschnittstelle (101) für die drahtgebundene Kommunikation mit der Datenverarbeitungsentität (DVE) ausgebildet ist, wobei die zweite Kommunikationsschnittstelle (103) für die Kommunikation mit dem Kommunikationsnetzwerk (KN) ausgebildet ist, mit:
Empfangen (201) eines personenbezogenen Merkmals des Benutzers durch die Benutzerschnittstelle (105);
Authentifizieren (203) des Benutzers auf der Basis des empfangenen personenbezogenen Merkmals für den Zugriff auf das Kommunikationsnetzwerk (KN) durch den Prozessor (107); und
Freigeben (205) einer Kommunikationsverbindung zwischen der ersten Kommunikationsschnittstelle (101) und dem Kommunikationsnetzwerk (KN) über die zweite Kommunikationsschnittstelle (103) durch den Prozessor (107) bei erfolgreicher Authentifizierung des Benutzers, **dadurch gekennzeichnet, dass** der Prozessor (107) bei erfolgreicher Authentifizierung des Benutzers die zweite Kommunikationsschnittstelle (103) zum Aufbauen einer Kommunikationsverbindung anweist, wobei die zweite Kommunikationsschnittstelle (103) die Kommunikationsverbindung mit dem Kommunikationsnetzwerk (KN) aufbaut.

14. Computerprogramm mit einem Programmcode zum Durchführen des Verfahrens (200) nach Anspruch 13, wenn der Programmcode auf einem Netzwerkmodul (100) ausgeführt wird.

## Claims

1. A network module (100) for providing a communication connection between a data processing entity (DVE) of a user and a communication network (KN), the network module (100) comprising:
a first communication interface (101) for wired communication with the data processing entity (DVE);
a second communication interface (103) for communication with the communication network (KN);
a user interface (105) which is configured to receive a personal characteristic of the user; and
a processor (107) which is configured to authenticate the user on the basis of the received personal characteristic for access to the communication network (KN), wherein the processor (107) is further configured to enable a communication connection between the first communication interface (101) and the communication network (KN) via the second communication interface (103) if the user is successfully authenticated, **characterized in that** the processor (107) is configured to instruct the second communication interface (103) to establish the communication connection if the user is successfully authenticated, and wherein the second communication interface (103) is configured to establish the communication connection with the communication network (KN).

2. The network module (100) according to claim 1, wherein the personal characteristic of the user is a biometric characteristic of the user, and wherein the user interface (105) is configured to capture the biometric characteristic of the user.

3. The network module (100) according to claim 2, wherein the user interface (105) comprises a fingerprint reader or a vein image reader or an iris scanner for capturing the biometric characteristic of the user.

4. The network module (100) according to one of the preceding claims, comprising a memory in which a reference characteristic is stored, in particular a reference fingerprint or a reference iris image or a reference vein image, and wherein the processor (107) is configured to compare the received personal characteristic with the stored reference characteristic and to authenticate the user if the received personal characteristic and the stored reference characteristic matches.

5. The network module (100) according to one of the preceding claims, wherein the second communication interface (103) is configured to transfer the received personal characteristic via the communication network (KN) to an authentication server (401) for authenticating the user for access to the communication network (KN), and wherein the second communication interface (103) is configured to receive an authentication signal from the authentication server (401) via the communication network (KN), and wherein the processor (107) is configured to enable the communication connection between the first communication interface (101) and the communication network (KN) via the second communication interface (103) if the authentication signal indicates the authentication of the user for access to the communication network (KN).

6. The network module (100) according to one of the preceding claims, wherein the processor (107) is configured to establish a communication connection between the first communication interface (101) and the second communication interface (103) if the user is successfully authenticated.

7. The network module (100) according to one of the preceding claims, wherein the second communication interface (103) comprises a subscriber identity module for communication via the communication network (KN), and wherein the communication network (KN) is a mobile communication network (KN).

8. The network module (100) according to one of the preceding claims, wherein the second communication interface (103) is configured to communicate with the communication network (KN) in a wired or wireless manner.

9. The network module (100) according to one of the preceding claims, wherein the first communication interface (101) is a wired communication interface.

10. The network module (100) according to one of the preceding claims, wherein the first communication interface (101) is a wired communication interface which is configured to receive electrical energy for operating the network module (100) from the data processing entity (DVE).

11. The network module (100) according to one of the preceding claims, which is configured as a portable hardware token.

12. The network module (100) according to one of the preceding claims, wherein the processor (107) is configured to establish the communication connection between the first communication interface (101) and the communication network (KN) after a predetermined time interval is elapsed or if a predetermined data volume limit value is reached or in response to receiving a deactivation signal via the first communication interface (101) from the data processing entity (DVE).

13. A method (200) for operating a network module (100) for providing a communication connection between a data processing entity (DVE) of a user and a communication network (KN), wherein the network module (100) comprises a first communication interface (101), a second communication interface (103), a user interface (105) and a processor (107), wherein the first communication interface (101) is configured for wired communication with the data processing entity (DVE), wherein the second communication interface (103) is configured for communication with the communication network (KN), the method (200) comprising:
receiving (201) a personal characteristic of the user by the user interface (105);
authenticating (203) the user on the basis of the received personal characteristic for access to the communication network (KN) by the processor (107); and
enabling (205) a communication connection between the first communication interface (101) and the communication network (KN) via the second communication interface (103) by the processor (107) if the user is successfully authenticated, **characterized in that** the processor (107) instructs the second communication interface (103) to establish the communication connection if the user is successfully authenticated, and wherein the second communication interface (103) establishes the communication connection with the communication network (KN).

14. A computer program comprising a program code for performing the method (200) according to claim 13, when the program code is executed on a network module (100).

## Revendications

1. Module de réseau (100) permettant de fournir une liaison de communication entre une entité de traitement de données (DVE) d'un utilisateur et un réseau de communication (KN), comprenant :
une première interface de communication (101) pour la communication filaire avec l'entité de traitement de données (DVE) ;
une deuxième interface de communication (103) pour la communication avec le réseau de communication (KN) ;
une interface utilisateur (105) qui est réalisée pour recevoir une particularité personnelle de l'utilisateur ; et
un processeur (107) qui est réalisé pour authentifier l'utilisateur sur la base de la particularité personnelle reçue pour l'accès au réseau de communication (KN), le processeur (107) étant en outre réalisé, en cas d'authentification réussie de l'utilisateur, pour libérer une liaison de communication entre la première interface de communication (101) et le réseau de communication (KN) par l'intermédiaire de la deuxième interface de communication (103),
**caractérisé en ce que** le processeur (107) est réalisé, en cas d'authentification réussie de l'utilisateur, pour ordonner à la deuxième interface de communication (103) d'établir la liaison de communication, et la deuxième interface de communication (103) étant réalisée pour établir la liaison de communication avec le réseau de communication (KN).

2. Module de réseau (100) selon la revendication 1, dans lequel la particularité personnelle de l'utilisateur est une particularité biométrique de l'utilisateur, et l'interface utilisateur (105) étant réalisée pour enregistrer la particularité biométrique de l'utilisateur.

3. Module de réseau (100) selon la revendication 2, dans lequel l'interface utilisateur (105) présente un lecteur d'empreintes digitales ou un lecteur d'image de veines ou un scanner d'iris pour enregistrer la particularité biométrique.

4. Module de réseau (100) selon l'une quelconque des revendications précédentes, comprenant une mémoire dans laquelle une particularité de référence est stockée, en particulier une empreinte digitale de référence ou une image d'iris de référence ou une image de veines de référence, et le processeur (107) étant réalisé pour comparer la particularité personnelle reçue avec la particularité de référence stockée, et en cas de concordance entre la particularité personnelle reçue et la particularité de référence stockée, pour authentifier l'utilisateur.

5. Module de réseau (100) selon l'une quelconque des revendications précédentes, dans lequel la deuxième interface de communication (103) est réalisée pour transmettre la particularité personnelle reçue par le réseau de communication (KN) à un serveur d'authentification (401) pour l'authentification de l'utilisateur pour l'accès au réseau de communication (KN), et la deuxième interface de communication (103) étant réalisée pour recevoir du serveur d'authentification (401) par le réseau de communication (KN) un signal d'authentification, et le processeur (107) étant réalisé pour libérer la liaison de communication entre la première interface de communication (101) et le réseau de communication (KN) par l'intermédiaire de la deuxième interface de communication (103) si le signal d'authentification indique l'authentification de l'utilisateur pour l'accès au réseau de communication (KN).

6. Module de réseau (100) selon l'une quelconque des revendications précédentes, dans lequel le processeur (107) est réalisé, en cas d'authentification réussie de l'utilisateur, pour établir une liaison de communication entre la première interface de communication (101) et la deuxième interface de communication (103).

7. Module de réseau (100) selon l'une quelconque des revendications précédentes, dans lequel la deuxième interface de communication (103) présente un module d'identité d'abonné pour la communication par le réseau de communication (KN), et le réseau de communication (KN) étant un réseau de communication mobile (KN).

8. Module de réseau (100) selon l'une quelconque des revendications précédentes, dans lequel la deuxième interface de communication (103) est réalisée pour communiquer avec ou sans fil avec le réseau de communication (KN).

9. Module de réseau (100) selon l'une quelconque des revendications précédentes, dans lequel la première interface de communication (101) est une interface de communication filaire.

10. Module de réseau (100) selon l'une quelconque des revendications précédentes, dans lequel la première interface de communication (101) est une interface de communication filaire qui est réalisée pour recevoir de l'entité de traitement de données (DVE) de l'énergie électrique pour faire fonctionner le module de réseau (100) .

11. Module de réseau (100) selon l'une quelconque des revendications précédentes, qui est réalisé sous la forme d'un jeton matériel portable.

12. Module de réseau (100) selon l'une quelconque des revendications précédentes, dans lequel le processeur (107) est réalisé pour désactiver la liaison de communication entre la première interface de communication (101) et le réseau de communication (KN) après expiration d'un intervalle de temps prédéterminé, ou si une valeur limite de volume de données prédéterminée est atteinte, ou en réponse à la réception depuis l'entité de traitement de données (DVE) d'un signal de désactivation par l'intermédiaire de la première interface de communication (101).

13. Procédé (200) permettant de faire fonctionner un module de réseau (100) permettant de fournir une liaison de communication entre une entité de traitement de données (DVE) d'un utilisateur et un réseau de communication (KN), le module de réseau (100) présentant une première interface de communication (101), une deuxième interface de communication (103), une interface utilisateur (105) et un processeur (107), la première interface de communication (101) étant réalisée pour la communication filaire avec l'entité de traitement de données (DVE), la deuxième interface de communication (103) étant réalisée pour la communication avec le réseau de communication (KN), comprenant les étapes consistant à :
recevoir (201) une particularité personnelle de l'utilisateur par l'intermédiaire de l'interface utilisateur (105) ;
authentifier (203) l'utilisateur sur la base de la particularité personnelle reçue pour l'accès au réseau de communication (KN) par le processeur (107) ; et
libérer (205) une liaison de communication entre la première interface de communication (101) et le réseau de communication (KN) par l'intermédiaire de la deuxième interface de communication (103) par le processeur (107) en cas d'authentification réussie de l'utilisateur,
**caractérisé en ce que** le processeur (107), en cas d'authentification réussie de l'utilisateur, ordonne à la deuxième interface de communication (103) d'établir une liaison de communication, la deuxième interface de communication (103) établissant la liaison de communication avec le réseau de communication (KN).

14. Programme informatique comprenant du code programme pour exécuter le procédé (200) selon la revendication 13 lorsque le code programme est exécuté sur un module de réseau (100).
